# EUROPEAN PATENT APPLICATION

(11) **EP 1 209 605 A2**
(43) Date of publication of application: **29.05.2002**
(21) Application number: 01309371.1
(22) Date of filing: 06.11.2001
(51) Int. Cl.: G06F 17/60

(54) **Method and system for assessing work performance**

(30) Priority: 10.11.2000 US 710207
(71) Applicant: GENERAL ELECTRIC COMPANY, Schenectady, NY 12345 (US)
(72) Inventor: Halase, John Frank, West Chester, Ohio 45069 (US)
(74) Representative: Goode, Ian Roy

(57) **Abstract**

A method (100) and system for assessing work performance of an operator remotely accessible by an operator workstation such as an operator's personal computer or computer terminal to a host computer such as a computer server or main frame computer. One or more work performance assessment programs are transmitted (106) through the host computer to the operator workstation in response to a request for same by the operator (101). In response to data entries provided (108) by the operator in carrying out the work performance assessment program (107), the host computer assesses the data entries (109) provided by the operator to generate feedback to be reviewed by the operator (112, 116).

## Description

The present invention relates generally to a method and system for assessing work performance. The present invention particularly relates to a method and system for assessing work performance using the Internet and other remote electronic transmission methods.

A number of businesses now use outside vendors or contractors to perform a variety of jobs, such as inspecting equipment or materials, manufacturing, processing or preparing various parts or components, evaluating equipment or other types of specified work functions. Many of these outside contractors perform these specified work functions remotely from the business they serve, and at increasingly dispersed locations around the globe. This makes it increasingly difficult to monitor, assess and evaluate the competence of the operators employed by these contractors to carry out these specified work functions, be it inspecting materials or equipment, or manufacturing, processing, preparing parts or components, or evaluating equipment. Adding to this difficulty is the need to carry out such performance audits, evaluations or tests based on consistent and objective standards, when the work functions performed by the operator can be complex, varied in nature and subject to operator judgment. See U.S. Patent 5,845,254 (Lockwood et al), issued December 1, 1998, which discloses a method and apparatus for objectively monitoring the performance of a group of health-care providers.

Current practice typically involves on-site audits at periodic spaced intervals to determine whether or not these operators and their associated facilities are performing at acceptable levels, as well as detecting whether the wrong equipment is being used in the designated procedure or has degraded over time. These audits can include a review of the operator's compliance with required practices and procedures, the proper use of designated equipment or procedures, whether the correct or properly functioning equipment is being used in the procedures, as well as observing the actual performance of the specified work function by the operator. As a result of the audit or evaluation, corrective action can be taken to remedy operator performance problems that are discovered, including additional operator training. See U.S. Patent 6,033,226 (Bullen), issued March 7, 2000, which discloses an interactive multi-media training system that incorporates test, audio, and video graphics animation and other tools to teach an operator to use a machining or other tool.

Operator variation can often be the most significant cause for improper performance of the designated work functions. Unfortunately, because of cost and other constraints, the audit can be limited to evaluating the competency of only one or a few operators at each site and thus may not provide the data needed to determine the competency of all or even most of the operators at that site. Indeed, the audit process can open itself to abuse when the contractor makes only the most competent operator or operators available for the audit, especially if the cost of on-site evaluation makes it difficult to carry out the audits frequently and/or when only one or a few auditors or evaluators possess the special skills and experience to carry out the required audit or evaluation. Moreover, when all of the operators at the site are not evaluated during these the periodic audits, this means the overall performance rating of the site cannot be determined or is likely to be incorrect because of insufficient data for an objective assessment.

In addition, in the interval between audits, personnel changes can occur and procedures can be revised, modified or replaced. This can also lead to variation in the performance of the designated procedures by the operators at a given site. For audits requiring extensive travel time, this interval can be extremely long, thus exacerbating the problem of operator variance. Also, as the number of contractors used by the business grows, and as the sites of these contractors are increasingly scattered around the world, the ability of conventional on-site operator competency audits and evaluation methods to effectively deal with operator variation issues, especially those related to changes in personnel and procedures, becomes even more difficult, if not impossible.

Other systemic problems also can occur in using traditional on-site audits of operators as the way to determine potential performance problems, especially when these contractors are located at various sites remote from the business they serve. For example, the auditor may want to evaluate the operator's work performance under different situations and scenarios. However, this may not be possible because of cost or other factors such as the inability to easily simulate the work function to be performed during the audit. See U.S. Patent 4,867,168 (Stoor et al), issued September 19, 1989, which discloses an apparatus for simulating inspection equipment such as ultrasonic NDT equipment or ultrasonic medical diagnostic equipment where the data is derived from non-simulated scanning of, for example, a structure containing defects and the ultrasonic waveforms obtained during such non-simulated scanning can be stored in computer memory to provide a realistic display during simulated scanning of the test body. Language barriers and other "cultural" issues can also make it difficult for the auditor to carry out an effective assessment or evaluation of the operator and especially a group of operators.

Accordingly, it would desirable, therefore, to provide a method and system that could be used to more easily and more frequently assess the work performance of an operator, and preferably a group of such operators, remotely located from the business they serve, under different situations and scenarios if desired or needed, and with the ability to use simulations of the work functions and to incorporate operator training as needed or desired, while minimizing the impediments of cost, time, culture and language issues. It would also be desirable to provide the ability in such a method and system to more frequently gather information or data from a number of operators assigned to different equipment or procedures to allow for the use of statistical treatments to determine capabilities to repeat or reproduce designated procedures and to track process trends, as well as to determine if systemic problems exist or to identify pockets of performance variation.

The present invention relates to a method and system for assessing work performance of an operator who has remote access through an operator workstation, such as an operator's personal computer or computer terminal, to a host computer, such as a computer server or main frame computer. The method and system of the present invention comprises:
(a) providing through the host computer at least one work performance assessment program that can be selected by an operator through an operator workstation;
(b) in response to a request by the operator transmitted from the operator workstation to the host computer to select at least one work performance assessment program, transmitting at least one work performance assessment program from the host computer to the operator workstation;
(c) in response to the data entries provided by the operator in carrying out the selected at least one work performance assessment program, assessing through the host computer the data entries provided by the operator to generate feedback to be reviewed by the operator; and
(d) transmitting the generated feedback through the host computer to the operator workstation for review by the operator.

The method and system of the present invention provides a number of benefits and advantages, especially with regard to overcoming the problems and inadequacies of traditional on-site audits or tests to assess or evaluate operator work performance. In particular, the auditor or tester does not have to be physically present or on-site to assess or evaluate the work performance of operator, but instead can be remotely located relative to the operator. Indeed, the audit or test can be carried out entirely by using the host computer as the auditor, evaluator or tester.

The auditor, evaluator or tester can also more easily pose different situations and scenarios for the operator during audit/evaluation, test process without the need of an actual physical work piece and/or equipment for performing the work function, thus allowing a larger database of potential situations and scenarios to be drawn from by the operator, as well as by the auditor, evaluator or tester. For example, during the audit, evaluation or test, the operator can ask for a different or more sensitive operation to enhance, detect or evaluate simulated scenario issues such as a flaw or defect to be detected during an inspection. The special or rare expertise of certain auditors, evaluators or testers can also be captured permanently, as well as making the audit, evaluation or testing process more consistent (i.e., standardizing the audit evaluation or test) by minimizing or eliminating variations between different auditors, evaluators or testers.

The method and system of the present invention also provides the ability to more frequently audit, evaluate or test operators and thus determine or detect much more rapidly potential degradations in operator capabilities, individually or as group, as well as revealing systemic issues sooner. The present invention also allows the audit, evaluation or test to be carried out at mutually convenient times to accommodate schedules so as to be less disruptive to the auditor/evaluator/tester and/or operator. The audit, evaluation or test can also be carried out to accommodate differences in language between the auditor, evaluator or tester, and the operator, as well as other potentially disruptive "cultural" issues. It can also be used to improve requirement specifications for the designated work function, including dealing with definitional problems that can result from translations from one language to another, or from one culture to another.

While the method and system of the present invention carries out the assessment of work performance remotely, it can still retain the flexibility required to capture the human interaction of an on-site audit, evaluation or test. For example, the method and system of the present invention can check on how an operator makes judgments, interprets requirements, interacts with the equipment and adapts to various situations or scenarios, thus allowing for evaluation of the broader capabilities of the operator. It can also be used to provide operator training to improve these capabilities, including providing immediate feedback as desired. The audit, evaluation or test can also automatically collect data to establish trends for each operator or group of operators to determine performance strengths and weaknesses of the individual or the group. Likewise, similar data from a variety of sites and sources can be compared to determine if systemic problems exist or to identify pockets of performance variation. Indeed, this ability to more frequently gather data on a number of operators at a number of different sites who are assigned to different equipment or procedures would allow the use of statistical methods to establish process standards, to determine the capability of the various operators or sites to repeat or reproduce the designated procedures according to the designated standards or bench mark, as well as to track process trends.

An embodiment of the invention will now be described, by way of example, with reference to the accompanying drawings, in which:

FIG. 1 is a block diagram representing an embodiment of a system of the present invention.

FIG. 2 is a flowchart illustrating the steps that are carried out according to an embodiment of the method of the present invention.

As used herein, the term "operator" refers to the individual (or group of individuals) whose work performance is being assessed. Operators whose work performance can be assessed by the method of the present invention include inspectors and analysts (e.g., inspectors and analysts of components, materials, equipment, processes, and the like, using a variety techniques including visual inspection, equipment assisted inspections such as X-ray, ultrasonic, magnetic resonance imaging, mass spectroscopy, infrared, electronic diagnostic methods, chromatography and other chemical analytical methods, and the like), equipment, metalworking and machine operators (e.g., those performing various equipment, machining and metalworking functions including machining, drilling, boring, milling, grinding, reaming, cutting, finishing, fabricating, assembling, heavy equipment operation, and the like), chemical, mechanical and electrical process operators (e.g., those performing various chemical, mechanical and electrical process functions including operations involving reacting, coating, synthesizing, laminating, refining, cracking, separating, distilling, power generation and control, material handling and the like), as well any other operator whose task or function requires overseeing a process, operation or system involving human judgment and/or understanding. The method of the present invention is particularly directed at assessing the performance of equipment inspectors and especially those who carry out inspections on a specified equipment components such as turbine engine components.

As used herein, the terms "auditor," "evaluator" and "tester" are used interchangeably to refer to the entity (or entities) that is involved in carrying out the assessment of the operator's work performance. As such, the auditor/evaluator/tester can be the host computer, a human or group of humans or a combination thereof.

As used herein, the term "operator workstation" refers to a terminal or computer that is normally used by the operator as the means to access the host computer.

As used herein, the term "host computer" refers to a computer system, typically a server computer but also possibly a main frame computer, that is used to provide access to, and typically storage of, the assessment program or programs to be selected by the operator through their operator workstation.

As used herein, the term "transmission" refers to any type of transmission that can be carried out electronically be wired methods, wireless methods or combinations thereof. Typical electronic transmissions within the scope of the present invention can be carried out by a variety of remote electronic transmission methods, such as by using Local or Wide Area Network (LAN or WAN)-based, Internet-based, or web-based transmission methods, cable television or wireless telecommunications networks, or any other suitable remote transmission method.

As used herein, the term "software" refers to any form of programmed machine-readable language or instructions (e.g., object code) that, when, loaded or otherwise installed, provides operating instructions to a machine capable of reading those instructions, such as a computer or other computer program reader. Software useful in the present invention can be stored or reside on, as well as be loaded or installed from, one or more floppy disks, CD ROM disks, hard disks or any other form of suitable non-volatile electronic storage media. Software useful in the present invention can also be installed by downloading or other form of remote transmission.

As used herein, the term "comprising" means various components, capabilities and/or steps can be conjointly employed in the present invention. Accordingly, the term "comprising" encompasses the more restrictive terms "consisting essentially of and "consisting of."

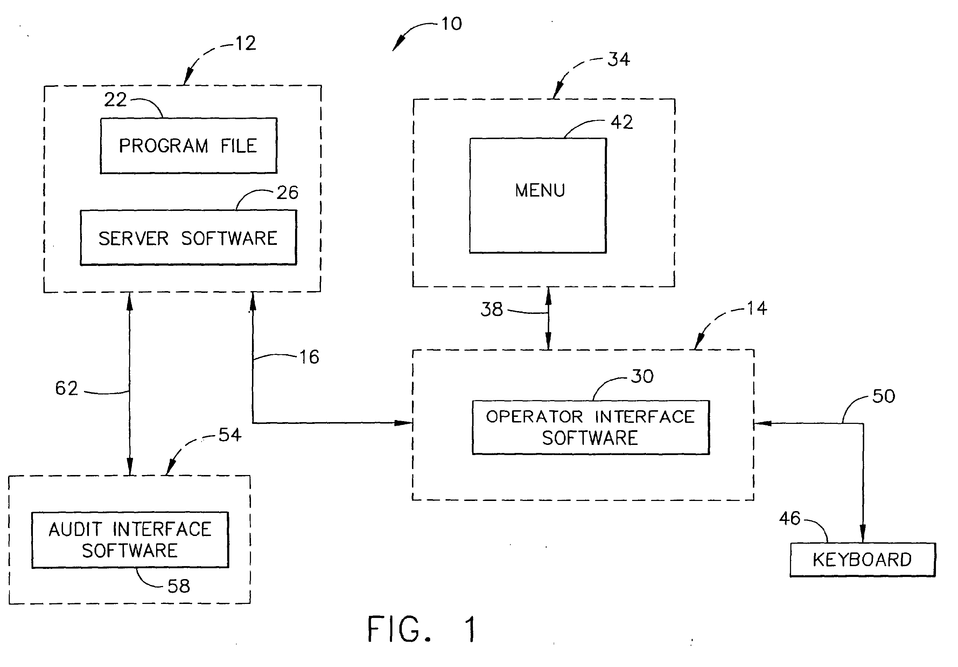

Referring to FIG. 1, an embodiment of the system of the present invention is indicated generally as 10. System 10 includes a host computer in the form of a server or main frame computer indicated generally as 12, an operator workstation in the form of a personal computer or terminal indicated generally as 14 that communicates with server 12 via a communications pathway indicated generally as 16 that can use Internet or web-based transmission methods, cable television or wireless telecommunications network-based transmission methods, Local or Wide Area Network (LAN or WAN)-based transmission methods, or any other suitable remote transmission method that is wired, wireless or a combination thereof. Server 12 is further shown as having an assessment program file and more typically program file(s) indicated generally as 22, including the programs files necessary to run the assessment program when downloaded remotely as described hereafter, and server software indicated generally as 26 that controls requests for and access to assessment program(s) 22. The operator's personal computer 14 is shown as having interface software generally indicated by 30 that permits interaction with server 12, such as the retrieval and downloading of program files 22, as well as other operations necessary to practice the method of the present invention.

System 10 can also include a display unit or monitor indicated generally as 34 that can be integral with operator computer 14 or can be connected as indicated by pathway 38 to operator computer 14 if separate therefrom. Monitor 34 typically displays a menu 42 that can provide various choices for the operator, including what assessment programs 22 are available on server 12, what data can or should be entered at a certain points or in certain fields, etc. The operator can input their choices through a keyboard or other input device indicated generally as 46 that is either integral with operator computer 14 or is connected as indicated by pathway 50 to operator computer 14 if separate therefrom. System 10 can also optionally include a remote auditor, evaluator or tester workstation (e.g., a terminal or computer hereafter collectively referred to as the "audit computer") indicated generally as 54 that is shown as having auditor, evaluator or tester interface software (hereafter collectively referred to as the "audit interface software") generally indicated as 58 to permit interaction with operator computer 14, as well as server 12 in practicing the method of the present invention, and which is connected to server 12 by a communications pathway indicated generally as 62 where a human auditor, evaluator or tester is involved. However, server 12 can also function as the auditor, evaluator or tester (i.e., an automated auditor/evaluator/tester) if server software 26 provides that capability.

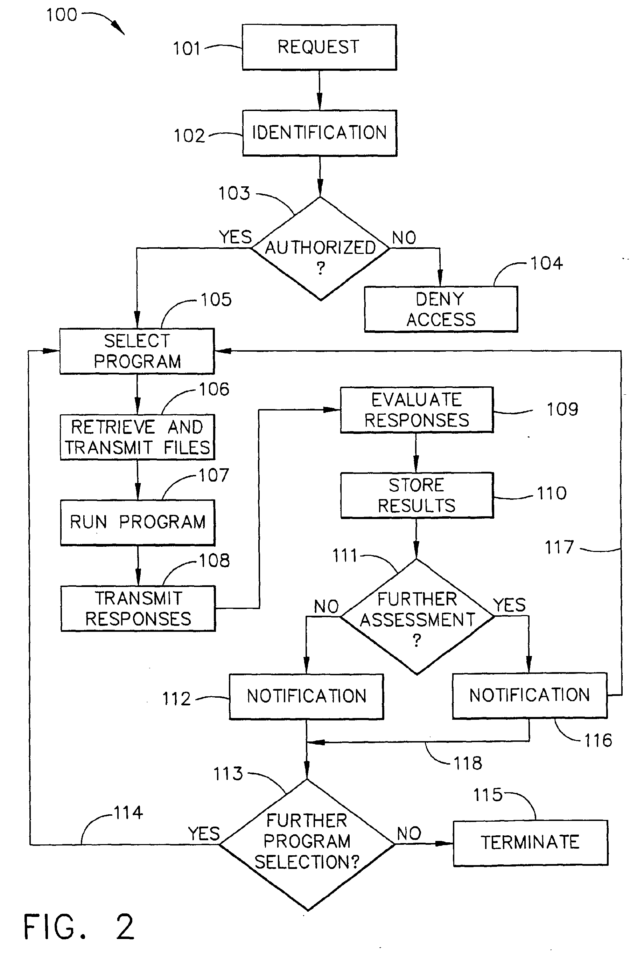

FIG. 2 provides a flowchart indicated generally as 100 to illustrate in more detail an embodiment of the method of the present invention for implementing the system of FIG. 1. Referring to FIG. 2, in initial step 101, the operator starts the process by requesting (via operator computer 14 using either menu 42 displayed on monitor 34 or some other suitable procedure) one or more assessment programs 22 from server 12. Alternatively, server 12 could automatically notify or prompt the operator at their computer 14 of the need to be audited, evaluated or tested (e.g., an automatically scheduled audit, evaluation or test), in which case the operator can then request one or more of the assessment programs 22 offered by server 12 for that scheduled audit, evaluation or test. The program(s) 22 requested can be for a specific program selected by the operator or can be a general request for a program, with the selection of the specific program to be left up to the server 12 (if performing the role of the auditor/evaluator/tester) or to a human auditor/evaluator/tester from their workstation 54. This selection can include the general type of assessment program to be carried out by the operator, the particular parameters to be used during the assessment program and the like.

In step 102, in response to the request for the assessment program by the operator, server 12 will typically request the operator to provide identification information (e.g., a personal identification number or PIN) to verify or authenticate who the operator is and whether that operator is authorized to have access to program(s) 22 on server 12. (If not already displayed, server 12 can also transmit the program files for displaying menu 42 on monitor 34.) Using menu 42, the operator can then enter the identification requested through their computer 14 (via keyboard 46).

In step 103, the identification information provided by the operator is transmitted to the server 12 (or other remote authentication system) to determine whether the operator is authorized to have access to the requested assessment program(s) 22. If the operator is not authorized, access will be denied, as shown in step 104. As shown in step 105, if the operator is authorized to have access to the requested assessment program(s) 22, the operator, the server 12, the audit computer 54, or a combination thereof, will then select one or more of the assessment programs, including any parameters selected or entered by the operator, server and/or human auditor/evaluator/tester.

At or before authorization step 105, it would also be preferable to determine whether the specified equipment, the specified procedure or both that is the subject of assessment program is properly set up before the audit, evaluation or test is carried out. Without such a "calibration" step, the results of the audit, evaluation or test could prove meaningless in determining whether the operator's performance varied from the appropriate standards or bench marks. In particular, this "calibration" step would ensure that the audit, evaluation or test reflects operator performance issues, i.e., the audit, evaluation or test would provide "meaningful" results on the operator's performance, as opposed to variations in the equipment, procedure or both unrelated to operator performance. Indeed, this "calibration" step could identify equipment and/or procedural variations that had previously been incorrectly attributed to operator performance variances.

This "calibration" step can be carried out (e.g., prior to the running of an assessment program 22 where the operator carries out at least one operation involving a specified procedure, specified equipment, or a specified procedure on specified equipment) in several ways. For example, equipment or software could be provided to the operator to check the configuration of the equipment and/or procedure to make sure they are according to standards before the audit, evaluation or test was run, as well as to allow verification of such a "calibration" by server 12. Bar codes and other equipment coding methods can be used that can be visually scanned or otherwise electronically interrogated with portable data capture devices (operating similar to handheld inventory recording units used in grocery stores) to gather and transmit equipment configuration information to the operator computer 14 and/or server 12. Alternatively or in combination with this "calibration" step, the audit, evaluation or test could be recorded, video taped (by either digital or analog video recording and storage devices) or otherwise monitored (including using real-time data acquisition of process and equipment parameters) to verify that the audit, evaluation or test session was carried using the appropriate equipment and/or procedural parameters, including providing any data from such verification to the server 12 during the assessment and/or afterwards to authenticate the reliability of the results generated.

As shown in step 106, after the assessment program(s) 22 has been selected by the operator, server and/or auditor/evaluator/tester, server 12 then retrieves the appropriate program files (e.g., test and image files) and transmits those files to operator computer 14 (via pathway 16). If a human auditor/evaluator/tester is involved, appropriate program files are also typically transmitted (via pathway 62) to auditor/evaluator/tester workstation 54. The files 22 that are transmitted are then downloaded onto operator computer 14 (and workstation 54) so that the assessment program(s) can be run.

In step 107, the assessment program is then run by the operator alone, or in conjunction with appropriate input from the server 12 and/or human auditor/evaluator/tester (from audit computer 54). During the running of the assessment program, the operator provides or generates data entries or responses that are entered via keyboard 46 to operator computer 14 which then transmits those entered operator responses (via pathway 16) to server 12. The entered operator responses received by server 12 can also be transmitted (via pathway 62) to workstation 54 for review by the auditor/evaluator/tester. In addition, information and data relevant the whether the assessment program(s) was carried by the operator using procedures and equipment that had been appropriately "calibrated" could also be transmitted to server 12 and/or audit computer 54 for review by the auditor/evaluator/tester.

In step 109, the responses are then evaluated by server 12 alone, or in combination with input from the human auditor/evaluator/tester via workstation 54. As shown in step 110, the operator responses transmitted, as well as the results or feedback generated by the evaluation of those responses, are typically stored in a database on server 12 for future use or consideration. In step 111, server 12 alone (or in combination with input from the auditor/evaluator/tester via workstation 54) determines whether further assessment of the operator is required or desirable. (The auditor/evaluator/tester at the audit computer 54 is also preferably notified of the results or feedback generated by the evaluation.) If it is determined that no further assessment of the operator is required, the operator is typically notified in step 112 of this fact, including the results or feedback generated by the evaluation. The operator will then have the option of selecting further assessment programs, as shown in step 113. If the operator indicates a desire to select additional assessment programs, the assessment process is repeated, as shown by arrow 114, beginning with step 105. If the operator indicates a desire not to select additional assessment programs, the assessment process terminates, as shown in step 115.

If it is determined that further assessment of the operator is required or would be desirable, the operator is typically notified in step 116 of this fact, including the results or feedback generated by the evaluation. The operator can then be automatically returned to step 105, as shown by arrow 115, or can be given the choice to select the same or other assessment programs, as shown by arrow 118, including the ability to terminate the process (i.e., step 115).

The present invention can also be provided in the form of downloadable or otherwise installable software that can be used in system 10, and in particular as the combination of the server software component 26 (used with server 12), the operator interface software component 30 (used with operator computer 14) and audit software component 58 (used with audit computer 54). Server software component 26 controls requests for and access to the work performance assessment program(s) 22 and is at least capable of: (1) in response to a request by the operator transmitted from the operator computer 14, to transmit the program file(s) 22 to operator computer 14; (2) to assess the data entries provided by the operator (e.g., through keyboard 46) in carrying out program(s) 22; and (3) to transmit the generated feedback to the operator computer 14 for review by the operator. Operator interface software 30 permits interaction with server 12 (such as the retrieval and downloading of program files 22) and auditor/evaluator/tester workstation 54 (if used), and is at least capable of: (1) allowing the operator to select the program(s) 22; (2) allowing the operator to provide data entries (e.g., through keyboard 46) in carrying out program(s) 22; (3) transmitting data entries provided by the operator to server 12; and (4) allowing the operator to review feedback generated by server 12 in response to the transmitted data entries. Audit interface software 58 permits interaction with server 12, primarily to permit transmission of information and data between workstation 54 and operator computer 14.

This software, as well as the various software components, can be provided or associated with a set of instructions for downloading or installation of the software on the system and/or use of the software with the system that are written or printed on one or more sheets of paper, in a multi-page manual, at the location where the software is located for remote downloading or installation (e.g., a server-based web site), on or inside the packaging in which the software is provided or sold, and/or on the electronic media (e.g., floppy disk or CD ROM disk) from which the software is loaded or installed, or any other suitable method for providing instructions on how to load, install and/or use the software

For completeness, various aspects of the invention are set out in the following numbered clauses:
1. A method (100) for assessing the work performance of an operator who has remote access through an operator workstation (14) to a host computer (12) having at least one work performance assessment program (22), the method (100) comprising the steps of:
   (a) providing through the host computer (12) at least one work performance assessment program (22) that can be selected by an operator through an operator workstation (14);
   (b) in response to a request (101) by the operator transmitted from the operator workstation (14) to the host computer (12) to select (105) at least one assessment program, transmitting (106) at least one assessment program (22) from the host computer (12) to the operator workstation (14);
   (c) in response to data entries provided (108) by the operator in carrying out (107) the selected at least one assessment program (22), assessing (109) through the host computer (12) the data entries provided by the operator to generate feedback to be reviewed by the operator;
   (d) transmitting (112, 115) the generated feedback through the host computer (12) to the operator workstation (14) for review by the operator.
2. The method (100) of clause 1 wherein the operator is prompted by the host computer (12) to select (101, 105) the at least one assessment program (22).
3. The method (100) of clause 2 wherein in step (b) (101, 106) the host computer (12) selects (105) the at least one assessment program (12) in response to the request by the operator (101).
4. The method (100) of clause 1 wherein in step (b) (101, 106) the operator selects (105) the at least one assessment program (22).
5. The method (101) of clause 1 wherein the at least one assessment program (22) involves having the operator carry out at least one operation involving: (i) a specified procedure; (ii) specified equipment; and (iii) a specified procedure on specified equipment, and which comprises the further step of calibrating the at least one operation prior to the operator carrying out (107) the at least one assessment program (22).
6. The method (100) of clause 1 which comprises the further step (e) (113) of giving the operator the option to select another work performance assessment program (22) and wherein if the operator:
   (i) desires to select another work performance assessment program, repeating (114) steps (b) through (d); or
   (ii) does not desire to select another work performance assessment program, terminating (115) the assessment process for the operator.
7. The method (100) of clause 1 wherein the feedback generated during (109) step (c) is stored (110) in a database on the server (12).
8. The method (100) of clause 1 wherein the operator is an equipment inspector and wherein the at least one assessment program (22) comprises assessing the performance (107) of the equipment inspector in carrying out an inspection on at least one specified equipment component.
9. The method (100) of clause 1 which comprises, prior to step (b) (101, 106), the further step of requesting the identification of the operator (102) and in response to the operator identification provided (103):
   (i) if the operator identified does not have authorization for access to the at least one assessment program, denying (104) access thereto; or
   (ii) if the operator identified does have authorization for access to the at least one assessment program, granting (105) access thereto.
10. A method (100) for assessing the work performance of an operator who has remote access through an operator workstation (14) to a host computer (12) having at least one work performance assessment program (22), the method (100) comprising the steps of.
   (a) transmitting (101) through the operator workstation (14) a request for at least one assessment program (22) from the host computer (12);
   (b) in response to the request (101) for the at least one assessment program, providing (102) through the host computer (12) a request for identification of the operator to the operator workstation;
   (c) in response to the request (102) for identification of the operator, transmitting (102, 103) through the operator workstation (14) the requested operator identification to the host computer (12);
   (d) in response to the operator identification provided (103):
      (i) if the operator identified does not have authorization for access to the at least one assessment program, denying (104) access thereto; or
      (ii) if the operator identified does have authorization for access to the at least one assessment program; granting (105) access thereto;
   (e) if access is granted to the at least one assessment program, selecting (105)at least one assessment program (22);
   (f) transmitting (106) from the host computer (12) to the operator workstation (14) the program files (22) for the selected at least one assessment program necessary to run (107) the selected at least one assessment program (22) on the operator workstation (14);
   (g) running (107) the selected at least one assessment program (22) on the operator workstation (14);
   (h) having (108) the operator provide responses during the running (107) of the selected at least one assessment program (22) on the operator computer (14);
   (i) transmitting (108) the operator responses to the host computer (12) for evaluation;
   (j) evaluating (109) the operator responses to generate feedback for review by the operator;
   (k) transmitting (112, 116) the generated feedback to the operator workstation (14) for review by the operator.
11. The method (100) of clause 10 wherein the at least one assessment program (22) involves having the operator carry out at least one operation involving: (i) a specified procedure; (ii) specified equipment; and (iii) a specified procedure on specified equipment, and which comprises the further step of calibrating the at least one operation prior to the operator carrying out (107) the at least one assessment program.
12. The method (100) of clause 10 which comprises the further step (e) (113) of giving the operator the option to select another work performance assessment program (22) and wherein if the operator:
   (i) desires to select another work performance assessment program, repeating (114) steps (b) through (d); or
   (ii) does not desire to select another work performance assessment program, terminating (115) the assessment process for the operator.
13. The method (100) of clause 10 wherein the operator is an equipment inspector and wherein the at least one assessment program (22) comprises assessing the performance (107) of the equipment inspector in carrying out an inspection on at least one specified equipment component.
14. A system (10) for remotely assessing the work performance of an operator, which comprises:
   (a) a server (12) having at least one work performance assessment program (22) residing thereon that can be selected by the operator through an operator computer (14);
   (b) an operator computer (14) in communication (16) with the server (12);
   (c) server software (26) residing on the server that controls requests for and access to the at least one assessment program (22) and is capable of: (1) in response to a request (101) by the operator transmitted from the operator computer (12) to select (105) the at least one assessment program (22), transmitting (106) the at least one assessment program (22) to the operator computer (14); (2) assessing data entries (109) provided by the operator in carrying out (107) the at least one assessment program (22) to generate feedback; and (3) transmitting (112, 116) the generated feedback to the operator computer (12) for review by the operator;
   (d) operator interface software (30) residing on the operator computer (14) that is capable of: (1) allowing the operator to select (101, 105, 106) the at least one assessment program (22); (2) allowing the operator to provide data entries (108) in carrying out (107) the at least one assessment program (22); (3) transmitting the data entries (108) provided by the operator to the server (12); and (4) allowing (112, 116) the operator to review the feedback generated by the server (12) in response the transmitted data entries (108).
15. The system (10) of clause 14 which further comprises a separate audit computer (54) in communication (62) with the server (12) and audit interface software (58) residing on the audit computer that is capable of permitting the transmission of information and data between the operator computer (14) and the audit computer (54).
16. The system of clause 15 wherein the operator is an equipment inspector and wherein the at least one assessment program (22) comprises assessing the performance (107) of the equipment inspector in carrying out an inspection on at least one specified equipment component.
17. Software (26, 30, 58) for use in a system (10) for remotely assessing the work performance of an operator, the system (10) including a server (12) having at least one work performance assessment program (22) residing thereon that can be selected by the operator through an operator computer (14) and an operator computer (14) in communication (16) with the server (12); the software (26, 30, 58) comprising:
   (a) a server software component (26) that can reside on the server (12) that controls requests for and access to the at least one work performance assessment program (22) and is capable of: (1) in response to a request (101) by the operator transmitted from the operator computer (14) to select (105) the at least one assessment program (12), transmitting (105) the at least one assessment program (22) to the operator computer (14); (2) assessing data entries (109) provided by the operator (108) in carrying out (107) the at least one assessment program (22) to generate feedback; and (3) transmitting (112, 116) the generated feedback to the operator computer (14) for review by the operator;
   (b) an operator interface software component (30) that can reside on the operator computer (14) and is capable of: (1) allowing the operator to select (101, 105, 106) the at least one assessment program (22); (2) allowing the operator to provide data entries (108) in carrying out (107) the at least one assessment program (22); (3) transmitting the data entries (108) provided by the operator to the server (12); and (4) allowing the operator (112, 116) to review the feedback generated (109) by the server (12) in response the transmitted data entries (108).
18. The software (26, 30, 58) of clause 17 wherein the system (10) further includes a separate audit computer (54) in communication (62) with the server (12) and wherein the software (26, 30, 58) further comprises an audit software component (53) that can reside on the audit computer (54) and which is capable of permitting the transmission of information and data between the operator computer (14) and the audit computer (54).
19. The software (26, 30, 58) of clause 17 that is stored and installable from one or more nonvolatile electronic storage media.
20. The software (26, 30, 58) of clause 19 wherein the electronic media are floppy disks or CD ROM disks.
21. The software (26, 30, 58) of clause 20 which has instructions provided or associated therewith for how to use the software with the system, how to install the software on the system, or how to use with and install the software on the system.

## Claims

1. A method (100) for assessing the work performance of an operator who has remote access through an operator workstation (14) to a host computer (12) having at least one work performance assessment program (22), the method (100) comprising the steps of:
(a) providing through the host computer (12) at least one work performance assessment program (22) that can be selected by an operator through an operator workstation (14);
(b) in response to a request (101) by the operator transmitted from the operator workstation (14) to the host computer (12) to select (105) at least one assessment program, transmitting (106) at least one assessment program (22) from the host computer (12) to the operator workstation (14);
(c) in response to data entries provided (108) by the operator in carrying out (107) the selected at least one assessment program (22), assessing (109) through the host computer (12) the data entries provided by the operator to generate feedback to be reviewed by the operator;
(d) transmitting (112, 115) the generated feedback through the host computer (12) to the operator workstation (14) for review by the operator.

2. The method (100) of claim 1 wherein in step (b) (101, 106) the operator selects (105) the at least one assessment program (22).

3. A method (100) for assessing the work performance of an operator who has remote access through an operator workstation (14) to a host computer (12) having at least one work performance assessment program (22), the method (100) comprising the steps of:
(a) transmitting (101) through the operator workstation (14) a request for at least one assessment program (22) from the host computer (12);
(b) in response to the request (101) for the at least one assessment program, providing (102) through the host computer (12) a request for identification of the operator to the operator workstation;
(c) in response to the request (102) for identification of the operator, transmitting (102, 103) through the operator workstation (14) the requested operator identification to the host computer (12);
(d) in response to the operator identification provided (103):
(i) if the operator identified does not have authorization for access to the at least one assessment program, denying (104) access thereto; or
(ii) if the operator identified does have authorization for access to the at least one assessment program; granting (105) access thereto;
(e) if access is granted to the at least one assessment program, selecting (105)at least one assessment program (22);
(f) transmitting (106) from the host computer (12) to the operator workstation (14) the program files (22) for the selected at least one assessment program necessary to run (107) the selected at least one assessment program (22) on the operator workstation (14);
(g) running (107) the selected at least one assessment program (22) on the operator workstation (14);
(h) having (108) the operator provide responses during the running (107) of the selected at least one assessment program (22) on the operator computer (14);
(i) transmitting (108) the operator responses to the host computer (12) for evaluation;
(j) evaluating (109) the operator responses to generate feedback for review by the operator;
(k) transmitting (112, 116) the generated feedback to the operator workstation (14) for review by the operator.

4. The method (100) of claim 1 or claim 3 wherein the at least one assessment program (22) involves having the operator carry out at least one operation involving: (i) a specified procedure; (ii) specified equipment; and (iii) a specified procedure on specified equipment, and which comprises the further step of calibrating the at least one operation prior to the operator carrying out (107) the at least one assessment program.

5. The method (100) of claim 1 or claim 3 which comprises the further step (e) (113) of giving the operator the option to select another work performance assessment program (22) and wherein if the operator:
(i) desires to select another work performance assessment program, repeating (114) steps (b) through (d); or
(ii) does not desire to select another work performance assessment program, terminating (115) the assessment process for the operator.

6. The method (100) of claim 1 or claim 3 wherein the operator is an equipment inspector and wherein the at least one assessment program (22) comprises assessing the performance (107) of the equipment inspector in carrying out an inspection on at least one specified equipment component.

7. A system (10) for remotely assessing the work performance of an operator, which comprises:
(a) a server (12) having at least one work performance assessment program (22) residing thereon that can be selected by the operator through an operator computer (14);
(b) an operator computer (14) in communication (16) with the server (12);
(c) server software (26) residing on the server that controls requests for and access to the at least one assessment program (22) and is capable of: (1) in response to a request (101) by the operator transmitted from the operator computer (12) to select (105) the at least one assessment program (22), transmitting (106) the at least one assessment program (22) to the operator computer (14); (2) assessing data entries (109) provided by the operator in carrying out (107) the at least one assessment program (22) to generate feedback; and (3) transmitting (112, 116) the generated feedback to the operator computer (12) for review by the operator;
(d) operator interface software (30) residing on the operator computer (14) that is capable of: (1) allowing the operator to select (101, 105, 106) the at least one assessment program (22); (2) allowing the operator to provide data entries (108) in carrying out (107) the at least one assessment program (22); (3) transmitting the data entries (108) provided by the operator to the server (12); and (4) allowing (112, 116) the operator to review the feedback generated by the server (12) in response the transmitted data entries (108).

8. The system (10) of claim 7 which further comprises a separate audit computer (54) in communication (62) with the server (12) and audit interface software (58) residing on the audit computer that is capable of permitting the transmission of information and data between the operator computer (14) and the audit computer (54).

9. Software (26, 30, 58) for use in a system (10) for remotely assessing the work performance of an operator, the system (10) including a server (12) having at least one work performance assessment program (22) residing thereon that can be selected by the operator through an operator computer (14) and an operator computer (14) in communication (16) with the server (12); the software (26, 30, 58) comprising:
(a) a server software component (26) that can reside on the server (12) that controls requests for and access to the at least one work performance assessment program (22) and is capable of: (1) in response to a request (101) by the operator transmitted from the operator computer (14) to select (105) the at least one assessment program (12), transmitting (105) the at least one assessment program (22) to the operator computer (14); (2) assessing data entries (109) provided by the operator (108) in carrying out (107) the at least one assessment program (22) to generate feedback; and (3) transmitting (112, 116) the generated feedback to the operator computer (14) for review by the operator;
(b) an operator interface software component (30) that can reside on the operator computer (14) and is capable of: (1) allowing the operator to select (101, 105, 106) the at least one assessment program (22); (2) allowing the operator to provide data entries (108) in carrying out (107) the at least one assessment program (22); (3) transmitting the data entries (108) provided by the operator to the server (12); and (4) allowing the operator (112, 116) to review the feedback generated (109) by the server (12) in response the transmitted data entries (108).

10. The software (26, 30, 58) of claim 9 wherein the system (10) further includes a separate audit computer (54) in communication (62) with the server (12) and wherein the software (26, 30, 58) further comprises an audit software component (53) that can reside on the audit computer (54) and which is capable of permitting the transmission of information and data between the operator computer (14) and the audit computer (54).
